# EUROPEAN PATENT APPLICATION

(11) **EP 4 462 342 A1**
(43) Date of publication of application: **13.11.2024**
(21) Application number: 22918696.0
(22) Date of filing: 29.09.2022
(51) Int. Cl.: G06Q 40/08

(54) **INSURANCE CLAIM PAYMENT REVIEWING SYSTEM, PROGRAM, AND INSURANCE CLAIM PAYMENT REVIEWING METHOD**

(30) Priority: 07.01.2022 JP 2022001386
(71) Applicant: Hitachi, Ltd., Tokyo 100-8280 (JP)
(72) Inventor: KIMURA, Sonoko, Tokyo 100-8280 (JP); YAMAMOTO, Tomonori, Tokyo 100-8280 (JP); MORIWAKI, Norihiko, Tokyo 100-8280 (JP); KOYAMA, Hikaru, Tokyo 100-8280 (JP)
(74) Representative: MERH-IP Matias Erny Reichl Hoffmann Patentanwälte PartG mbB
(86) International application number: PCT/JP2022/036381
(87) International publication number: WO 2023/132107

(57) **Abstract**

An insurance claim payment reviewing system (10) includes a determination unit (114) that receives a claim on an insurance benefit from insurance with respect to an incident, and approves the claim when a predicted probability of occurrence of the incident is lower than or equal to a predetermined value. Referring to a record of maintenance work performed on an object covered by the insurance, the determination unit (114) may reject the claim when predetermined maintenance work has not been performed on the object covered by the insurance. The insurance claim payment reviewing system (10) may further include a detection unit (113) that detects the occurrence of the incident with reference to the record of maintenance work performed on the object covered by the insurance.

## Description

### Technical Field

The present invention relates to an insurance claim payment reviewing system, a program, and an insurance claim payment reviewing method for reviewing whether to pay insurance.

### Background Art

In the insurance business, there is growing adoption of technologies such as investigation of damage caused by natural disasters using drones, the automation of call center operations using voice recognition technology, and the automation of insurance claim payment reviews using machine learning technology. In addition, it is expected that insurance of which a premium is determined based on a risk predicted by collecting data about an object covered by the insurance, such as a person, a facility, or a machine, will be more widespread.

According to the invention described in PTL 1, a malfunction of a technical entity can be predicted, and a probability of a malfunction at a certain future point can be calculated without depending on component types. In addition, according to the invention described in PTL 2, a claim can be evaluated and approved very quickly according to insurance industry standards.

### Citation List

### Patent Literature

PTL 1: WO 2016/026680 A1
PTL 2: JP 2011-505047 A

### Summary of Invention

### Technical Problem

In order to avoid an unexpected incident such as a failure of a device, an operator of the device can maintain the device based on a result of a prediction using a prediction technique such as the invention described in PTL 1. However, a possibility of an unexpected incident cannot be excluded. Here, the term "unexpected" (prediction error) means that an incident predicted to have a low probability of occurrence has occurred. In a case where a device predicted to malfunction based on the prediction result is maintained, if there are many prediction errors (a prediction accuracy is low), appropriate maintenance cannot be performed, resulting in damage.

In an automatic loss verification system that evaluates whether a claim is valid under an insurance contract or a debt protection contract as in PTL 2, damage caused by a prediction error is not compensated for.

The present invention has been made in view of such a background, and an object of the present invention is to provide an insurance claim payment reviewing system, a program, and an insurance claim payment reviewing method capable of compensating for damage caused by a prediction error.

### Solution to Problem

In order to solve the above-mentioned problem, an insurance claim payment reviewing system according to the present invention includes a determination unit that receives a claim on an insurance benefit from insurance with respect to an incident, and approves the claim when a predicted probability of occurrence of the incident is lower than or equal to a predetermined value.

### Advantageous Effects of Invention

According to the present invention, it is possible to provide an insurance claim payment reviewing system, a program, and an insurance claim payment reviewing method capable of compensating for damage caused by a prediction error. Other problems, configurations, and effects that are not described above will be apparent from the following description of embodiments.

### Brief Description of Drawings

[FIG. 1] FIG. 1 is an overall configuration diagram of an insurance claim payment reviewing system according to a first embodiment.
[FIG. 2] FIG. 2 is a data configuration diagram of an incident prediction database according to the first embodiment.
[FIG. 3] FIG. 3 is a data configuration diagram of a maintenance database according to the first embodiment.
[FIG. 4] FIG. 4 is a flowchart of an insurance claim payment reviewing process according to the first embodiment.
[FIG. 5] FIG. 5 is an overall configuration diagram of an insurance claim payment reviewing system according to a modification of the first embodiment.
[FIG. 6] FIG. 6 is an overall configuration diagram of an insurance claim payment reviewing system according to a second embodiment.
[FIG. 7] FIG. 7 is an overall configuration diagram of an insurance claim payment reviewing system according to a modification of the second embodiment.

### Description of Embodiments

Hereinafter, an insurance claim payment reviewing system in a mode (an embodiment) for carrying out the present invention will be described. With respect to a claim for payment of insurance on a facility/device that is an object covered by insurance, the insurance claim payment reviewing system confirms that an incident predicted to have a low probability of occurrence has occurred and damage has occurred, and approves the claim.

According to such an insurance claim payment reviewing system, insurance is paid to compensate for damage caused by an incident predicted to have a low probability of occurrence because maintenance has been performed. Existing insurance policies do not include any insurance that compensates for damage caused by an error in incident occurrence prediction. According to the present invention, it is possible to provide insurance that compensates for damage caused by an error in incident occurrence prediction on which determination of maintenance work is based. By using such insurance, an operator of the facility/device feels easy about carrying out maintenance work according to the incident occurrence prediction. For example, the operator can intensively carry out maintenance coping with an incident predicted to have a high probability of occurrence, and can use insurance to cope with an incident predicted to have a low probability of occurrence, resulting in efficient maintenance.

### «Overall Configuration of Insurance Claim Payment Reviewing System»

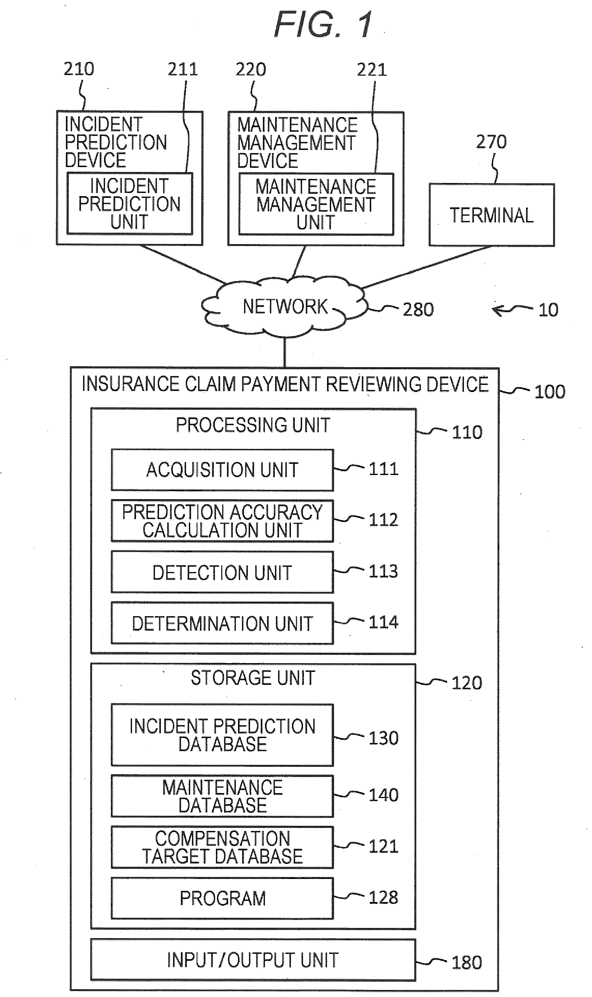

FIG. 1 is an overall configuration diagram of an insurance claim payment reviewing system 10 according to a first embodiment. The insurance claim payment reviewing system 10 includes an incident prediction device 210, a maintenance management device 220, and an insurance claim payment reviewing device 100. The incident prediction device 210, the maintenance management device 220, and the insurance claim payment reviewing device 100 can communicate with each other via a network 280.

A terminal 270 that can communicate with the insurance claim payment reviewing device 100 via the network 280 may be connected. When an incident has occurred in a facility/device that is an object covered by insurance and damage has occurred, an insurance contractor may claim insurance using the terminal 270.

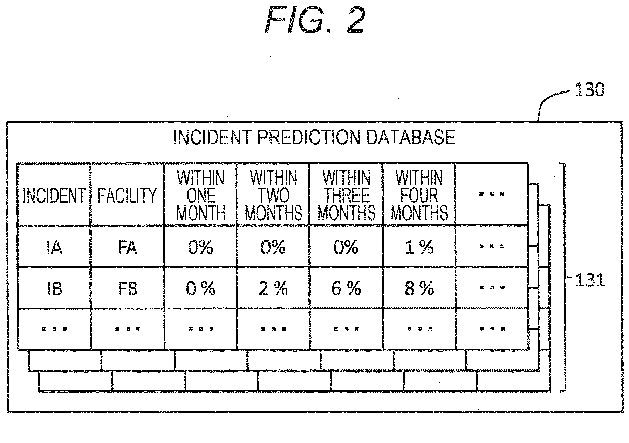

An incident prediction unit 211 included in the incident prediction device 210 predicts a probability that an incident will occur in the facility/device that is an object covered by insurance has occurred at a predetermined timing. The predetermined timing refers to, for example, within one month, or after one month and within two months. The incident prediction unit 211 predicts a probability that an incident will occur, for example, based on the type, the number of years of use, the usage environment, the maintenance status, and the failure rate of the facility/device. In addition, the incident prediction unit 211 transmits incident prediction data 131 (see FIG. 2 to be described below), which is a prediction result, to the insurance claim payment reviewing device 100, for example, periodically. In the following description, it is assumed that incident prediction data is transmitted in a cycle of one month.

As described above, the insurance claim payment reviewing system 10 includes the incident prediction unit 211 that calculates a predicted probability of occurrence of the incident.

In this manner, the predicted probability of occurrence of the incident is based on a probability that a failure will occur in an object covered by insurance (failure rate).

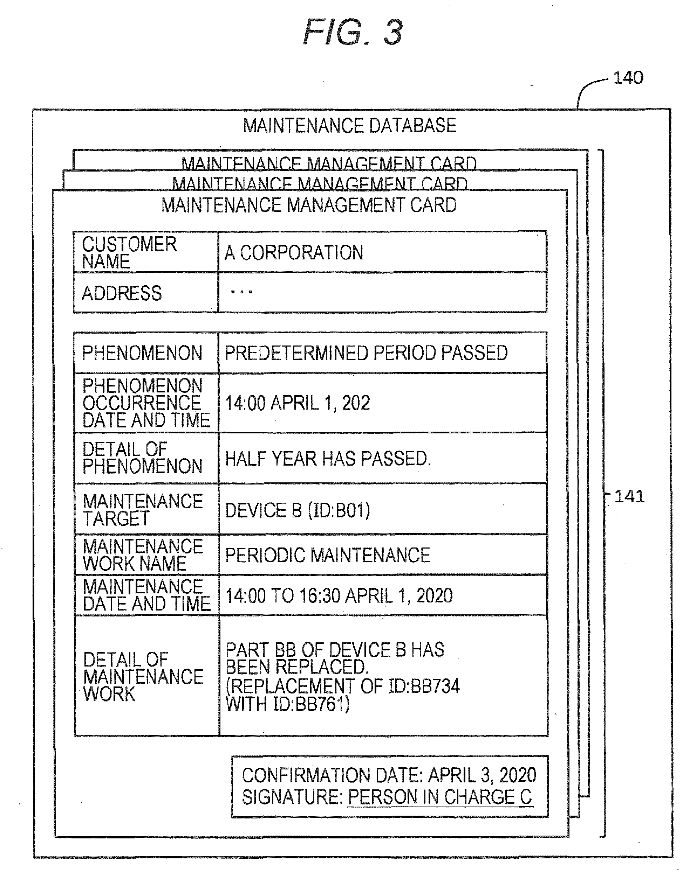

A maintenance management unit 221 included in the maintenance management device 220 acquires a maintenance management card 141 (see FIG. 3 to be described below), which is a record of maintenance work performed on the facility/device that is an object covered by insurance, and transmits the acquired maintenance management card 141 to the insurance claim payment reviewing device 100. The transmission timing may be a periodic timing or a timing at which the record of maintenance work is acquired.

### <<Functional Configuration of Insurance Claim Payment Reviewing Device>>

The insurance claim payment reviewing device 100 is a computer, and includes a processing unit 110, a storage unit 120, and an input/output unit 180. A user interface device such as a display, a keyboard, or a mouse is connected to the input/output unit 180. The input/output unit 180 includes a communication device, and can transmit and receive data to and from the incident prediction device 210 and the maintenance management device 220. In addition, a media drive may be connected to the input/output unit 180 so that data can be exchanged using a recording medium. The insurance claim payment reviewing device 100 may take a form of a cloud server in which a plurality of physical devices constitute one logical device.

<<Insurance Claim Payment Reviewing Device: Storage Unit>>

The storage unit 120 includes a storage device such as a read only memory (ROM), a random access memory (RAM), or a solid state drive (SSD). The storage unit 120 stores an incident prediction database 130 (see FIG. 2 to be described below), a maintenance database 140 (see FIG. 3 to be described below), a compensation target database 121, and a program 128.

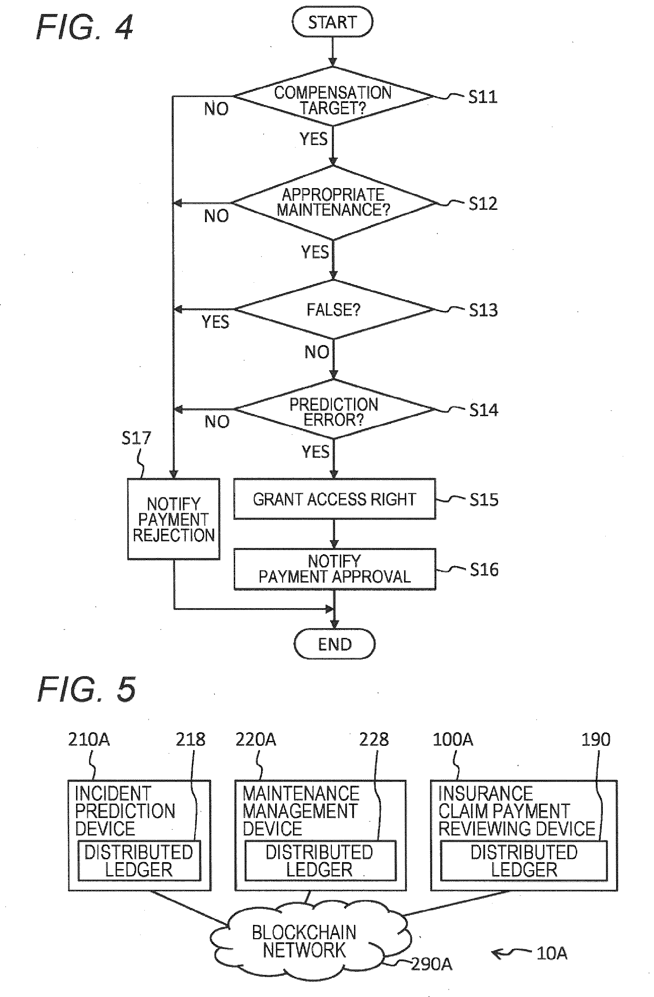

In the compensation target database 121, a facility/device and an incident to be compensated for by insurance in the facility/device are stored in association with each other. The program 128 includes a description of an insurance claim payment reviewing process (see FIG. 4 to be described below).

### <<Insurance Claim Payment Reviewing Device: Incident Prediction Database>>

FIG. 2 is a data configuration diagram of the incident prediction database 130 according to the first embodiment. The incident prediction database 130 stores incident prediction data 131 transmitted from the incident prediction device 210 in a cycle of one month. The incident prediction data 131 is data in a table format, with a predicted value of a probability of occurrence of an incident shown in each row (record). Specifically, each row includes columns (attributes) for items such as incident, facility/device (described as facility in FIG. 2), within one month, within two months, within three months, and the like. The item "facility/device" is information for identifying a facility/device, and the item "incident" is information (for example, a name) for identifying an incident occurring in the facility/device. The item "within one month" is a predictive value of a probability that the incident will occur in the facility/device within one month, and the item "within two months", a predictive value of a probability that the incident will occur in the facility/device after one month and within two months. The same applies to the items "within three months", "within four months", and the like.

### <<Insurance Claim Payment Reviewing Device: Maintenance Database>>

FIG. 3 is a data configuration diagram of the maintenance database 140 according to the first embodiment. The maintenance management card 141 transmitted from the maintenance management device 220 is stored in the maintenance database 140. The item "maintenance target" of the maintenance management card 141 includes information for identifying a device/facility that is an object covered by insurance as a maintenance target. The maintenance management card 141 also includes information such as "phenomenon" that triggers maintenance work, "phenomenon occurrence date and time", "maintenance work name", and "maintenance date and time". The item "phenomenon" includes a description of "passage of predetermined period" indicating that it is time for periodic maintenance or "occurrence of fire" indicating that an incident such as fire has occurred.

### <<Insurance Claim Payment Reviewing Device: Processing Unit>>

Returning to FIG. 1, the description of the processing unit 110 will be continued. The processing unit 110 includes a central processing unit (CPU), and includes an acquisition unit 111, a prediction accuracy calculation unit 112, a detection unit 113, and a determination unit 114.

The acquisition unit 111 receives the incident prediction data 131 from the incident prediction device 210, and stores the incident prediction data 131 in the incident prediction database 130. In addition, the acquisition unit 111 receives the maintenance management card 141 from the maintenance management device 220, and stores the maintenance management card 141 in the maintenance database 140.

The prediction accuracy calculation unit 112 calculates an accuracy of a predicted probability calculated by the incident prediction device 210 with reference to data in the incident prediction database 130 and the maintenance database 140. For example, the prediction accuracy calculation unit 112 group facilities/facilities by the same or similar type or by the number of years of use with reference to the data in the maintenance database 140, and calculates an incident occurrence frequency for each group . By comparing a predicted probability of a facility/device belonging to the group with the occurrence frequency, the prediction accuracy calculation unit 112 calculates an accuracy of the predicted probability.

In this manner, the insurance claim payment reviewing device 100 included in the insurance claim payment reviewing system 10 includes the prediction accuracy calculation unit 112 that calculates an accuracy of a predicted probability of occurrence of the incident.

The detection unit 113 detects that an incident has occurred by referring to the maintenance management card 141 in the maintenance database 140, and specifies the incident that has occurred. Forexample, the detection unit 113 detects an incident that has occurred from the "phenomenon" and the "maintenance work name", and specifies a facility/device and a date and time at which the incident has occurred from the "maintenance target" and the "phenomenon occurrence date and time".

In this manner, the insurance claim payment reviewing device 100 included in the insurance claim payment reviewing system 10 includes the detection unit 113 that detects an occurrence of an incident with reference to a record of maintenance work performed on an object covered by insurance (see the maintenance database 140).

### <<Insurance Claim Payment Reviewing Device: Determination Unit>>

Upon receiving an insurance payment claim, the determination unit 114 reviews the insurance payment claim. The insurance payment claim includes information for identifying a facility/device in which an incident has occurred. The determination unit 114 instructs the detection unit 113 to acquire an incident that has occurred in the facility/device, and determines whether the incident is a compensation target with reference to the compensation target database 121.

Note that, when the acquisition unit 111 detects an occurrence of an incident with reference to the maintenance management card 141 stored in the maintenance database 140, the detection unit 113 may notify the determination unit 114 of the incident and the facility/device in which the incident has occurred. The determination unit 114 determines whether the incident is a compensation target with reference to the compensation target database 121.

The determination unit 114 specifies what kind of maintenance has been performed on the facility/device covered by insurance by referring to the maintenance management card 141 indicating the facility/device in which the incident has occurred as a "maintenance target", and determines whether the maintenance is appropriate. For example, in a case where maintenance work as "periodic maintenance" corresponding to the facility/device is not executed at a predetermined timing, the determination unit 114 determines that appropriate maintenance has not been performed. In addition, in a case where the predicted probability of occurrence of the incident in the facility/device is higher than or equal to a predetermined value but maintenance corresponding to the incident has not been performed, the determination unit 114 determines that appropriate maintenance has not been performed.

The determination unit 114 confirms that the insurance payment claim is not false. For example, in a case where an insurance payment claim has been made but a maintenance management card 141 for corresponding maintenance work is not in the maintenance database 140, the determination unit 114 determines that the insurance payment claim is false.

The determination unit 114 confirms that the predicted probability of occurrence of the incident is lower than or equal to the predetermined value and is a prediction error. For example, when a predicted value of a probability that an incident will occur in a facility/device is lower than or equal to the predetermined value with reference to the latest incident prediction data 131, the determination unit 114 determines that the predicted value of the probability is a prediction error. In other words, the prediction error refers to, for example, a case where an incident predicted to have a low probability of occurrence (a probability of occurrence lower than or equal to the predetermined value) has occurred.

When the incident is a compensation target, appropriate maintenance has been performed, the insurance payment claim is not false, and the occurrence of the incident is a prediction error, the determination unit 114 approves the insurance payment claim. When the incident is not a compensation target, when appropriate maintenance has not been performed, when the insurance payment claim is false, or when the occurrence of the incident is not a prediction mistake, the determination unit 114 rejects the insurance payment claim (performs a rejection process, see step S17 in FIG. 4 to be described below).

In this manner, the insurance claim payment reviewing device 100 included in the insurance claim payment reviewing system 10 includes the determination unit 114 that receives a claim on an insurance benefit from insurance with respect to an incident and approves the claim when a predicted probability of occurrence of the incident is lower than or equal to a predetermined value.

Furthermore, referring to a record of maintenance work performed on an object covered by the insurance (see the maintenance database 140), the determination unit 114 rejects the claim when predetermined maintenance work has not been performed on the object covered by the insurance.

### <<Insurance Claim Payment Reviewing Process>>

FIG. 4 is a flowchart of an insurance claim payment reviewing process according to the first embodiment. When the insurance claim payment reviewing device 100 receives an insurance payment claim from the terminal 270, the insurance claim payment reviewing process is started. In addition, when a maintenance management card 141 for maintenance corresponding to the incident is received, the detection unit 113 detects the reception of the maintenance management card 141 and notifies the determination unit 114 of the same. Assuming that an insurance payment claim has been received, the determination unit 114 starts an insurance claim payment reviewing process.

In step S11, the determination unit 114 determines whether a facility/device included in the insurance payment claim and an incident that has occurred in the facility/device are compensation targets. The determination unit 114 proceeds to step S12 when the facility/device and the incident are compensation targets (step S11→YES), and proceeds to step S17 when the facility/device and the incident are not compensation targets (step S11→NO).

In step S12, the determination unit 114 determines whether maintenance performed on the facility/device is appropriate. The determination unit 114 proceeds to step S13 when the maintenance is appropriate (step S12→YES), and proceeds to step S17 when the maintenance is not appropriate (step S12→NO).

In step S13, the determination unit 114 determines whether the insurance payment claim is false. The determination unit 114 proceeds to step S14 when the insurance payment claim is not false (step S13→NO), and proceeds to step S17 when the insurance payment claim is false (step S13→YES).

In step S14, the determination unit 114 determines whether the prediction of occurrence of the incident is an error. When the prediction of occurrence of the incident is a prediction error (step S14→YES), the determination unit 114 proceeds to step S15, and when the prediction of occurrence of the incident is not a prediction error (step S14→NO), the determination unit proceeds to step S17.

In step S15, the determination unit 114 controls the right of access to the incident prediction data 131 and the maintenance management card 141 related to the insurance payment claim. For example, in a case where there is an insurance company that undertakes payment of insurance, the determination unit 114 changes the right of access so that the insurance company can access the incident prediction data 131 and the maintenance management card 141. For the incident prediction data 131, the insurance company may be allowed to access not only a predicted probability at the time of the occurrence of the incident but also a predicted probability after the occurrence of the incident.

In step S16, the determination unit 114 notifies approval of payment. For example, in a case where there is an insurance company that undertakes payment of insurance, the determination unit 114 notifies the insurance company that payment of insurance has been approved. In addition, in a case where the insurance payment claim is received from the terminal 270, the terminal 270 is notified of approval of payment.

In step S17, the determination unit 114 notifies rejection of payment. For example, in a case where the insurance payment claim is received from the terminal 270, the determination unit 114 notifies the terminal 270 of rejection of payment.

### <<Feature of Insurance Claim Payment Reviewing Device>>

The insurance claim payment reviewing device 100 performs a review to pay insurance for damage caused by an incident predicted to have a low probability of occurrence because maintenance has been performed. This makes it possible that the existing insurance compensates for damage caused by a prediction error that is not a target, and as a result, an operator of a facility/device feels easy about carrying out maintenance work determined based on incident occurrence prediction.

### <<Modification: Distributed Ledger>>

In the above-described embodiment, the incident prediction data 131 is transmitted from the incident prediction device 210 to the insurance claim payment reviewing device 100 and accumulated in the incident prediction database 130. In addition, the maintenance management card 141 is transmitted from the maintenance management device 220 to the insurance claim payment reviewing device 100 and accumulated in the maintenance database 140. The incident prediction data 131 and the maintenance management card 141 may be shared among the incident prediction device 210, the maintenance management device 220, and the insurance claim payment reviewing device 100 using a distributed ledger technology (blockchain network), rather than being individually transmitted and accumulated in the databases.

FIG. 5 is an overall configuration diagram of an insurance claim payment reviewing system 10A according to a modification of the first embodiment. In the insurance claim payment reviewing system 10A, an incident prediction device 210A, a maintenance management device 220A, and an insurance claim payment reviewing device 100A are nodes of a blockchain network 290A, and are connected to each other via the blockchain network 290A. The incident prediction data and the maintenance management card are recorded in the distributed ledgers 190, 218, and 228 and accessed.

In this manner, the determination unit 114 of the insurance claim payment reviewing device 100A included in the insurance claim payment reviewing system 10A acquires a predicted probability of occurrence of the incident with reference to the distributed ledgers (the distributed ledgers 190, 218, and 228) in which a predicted probability of occurrence of the incident calculated by the incident prediction device 210A, which calculates the predicted probability of occurrence, is recorded.

The maintenance work is recorded in the distributed ledgers.

### <<Second Embodiment>>

The insurance claim payment reviewing device 100 according to the first embodiment performs an insurance claim payment review when receiving an insurance payment claim or detecting maintenance work performed due to an incident. When the review result is approval, for example, an insurance company is notified of the approval, and the insurance company pays insurance. All or some of a series of insurance-related processes, such as concluding an insurance contract, managing details of the insurance contract, and paying insurance, may be executed as a smart contract on a blockchain network. For example, in a case where incident prediction data and a maintenance management card are recorded in a blockchain network (distributed ledgers), and an insurance payment claim occurs or maintenance work performed due to an incident is detected, an insurance claim payment reviewing process may be performed on the blockchain network. When the result of the review is approval, all or some of a series of insurance-related processes may be executed as a smart contract on the blockchain network until insurance is paid.

The smart contract refers to a contract, a system, or a mechanism in which a contract is concluded or fulfilled by a computer. In the smart contract, procedures/processes associated with conclusion and fulfillment of the contract and details of the contract are described/set as a source code and data, and are executed as a program at the time of execution. Note that the source code and the data reflect the details of the contract, and the source code and the data may be referred to as a smart contract. The program to be executed may also be referred to as a smart contract.

In the insurance claim payment reviewing system according to the second embodiment, a program for performing an insurance claim payment reviewing procedure (see the insurance claim payment reviewing process illustrated in FIG. 4) is executed as a transaction on a blockchain network.

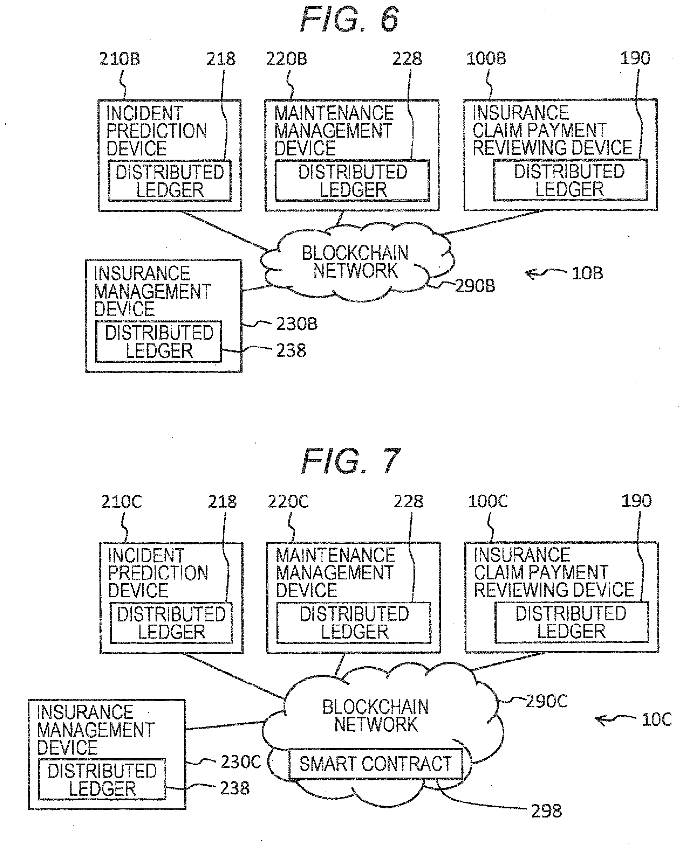

FIG. 6 is an overall configuration diagram of an insurance claim payment reviewing system 10B according to the second embodiment. In the insurance claim payment reviewing system 10B, an incident prediction device 210B, a maintenance management device 220B, an insurance management device 230B, and an insurance claim payment reviewing device 100B are nodes of a blockchain network, and are connected to each other via the blockchain network 290B. The incident prediction data, the maintenance management card, and the insurance claim payment reviewing result are recorded in the distributed ledgers 190, 218, 228, and 238. When the insurance claim payment reviewing result is approval, the insurance management device 230B pays insurance in accordance with the insurance contract.

FIG. 7 is an overall configuration diagram of an insurance claim payment reviewing system 10C according to a modification of the second embodiment. When an insurance contract is concluded, an insurance management device 230C deploys a smart contract 298 reflecting the insurance contract in a blockchain network 290C.

The smart contract 298 includes a source code of the determination unit 114 that executes an insurance claim payment reviewing process and data necessary for the insurance claim payment reviewing process (see the compensation target database 121) . The smart contract 298 may include a source code of the detection unit 113 that detects an occurrence of an incident with reference to a maintenance management card, a source code for receiving an insurance payment claim, a source code for payment of insurance, and data referred to by these source codes.

In this manner, the smart contract 298 is a program for causing a computer to execute a process as a smart contract (as a mechanism) on the blockchain network 290C, the process including: receiving a claim on an insurance benefit from insurance with respect to an incident; and approving the claim when a predicted probability of occurrence of the incident is lower than or equal to a predetermined value.

Note that procedures/processes other than the series of procedures/processes related to payment of insurance may be performed as a smart contract. For example, procedures such as concluding a contract and paying an insurance premium after details of the insurance contract are determined may be performed using the smart contract. In this manner, as an insurance claim payment reviewing system, procedures from conclusion to fulfillment of an insurance contract may be performed as transactions as a smart contract on the blockchain network.

By executing an insurance claim payment review as a smart contract as described above, the transparency of the review can be ensured.

### «Application Example»

The facility/device in the above-described embodiment may be a facility/device related to power supply. In this case, the incident may be, for example, an accident that occurs when a tree comes into contact with a power transmission line. Concerning such an accident, a predicted probability of occurrence of the incident can be calculated by predicting the growth of the tree and predicting the time of contact with the power transmission line. As another example of the incident, there is a power failure due to a collapse of a supply-demand balance of power. For example, a probability of occurrence of such a power failure can be predicted based on a prediction of a power demand.

The maintenance of the facility/device related to power supply includes periodic maintenance, replacement of parts, maintenance of trees around power transmission lines, activation of backup power, or the like.

For example, there may be an agreement for an incident as a compensation target, in which a fire caused by contact between a power transmission line and a tree is compensated for, but a fire caused by an earthquake is not compensated for. The details of the agreement are stored in the compensation target database 121, and it is determined in step S11 illustrated in FIG. 4 whether the details are in the agreement.

As described above, in the insurance claim payment reviewing system 10 related to the facility/device related to power supply, the incident is an accident of a power transmission line, and the predicted probability of occurrence of the incident is based on a prediction of a timing at which a tree comes into contact with the power transmission line. In addition, the incident is a power failure, and the predicted probability of occurrence of the incident is based on a prediction of a power demand.

### <<Other Modifications>>

Although some embodiments of the present invention have been described above, these embodiments are merely examples and do not limit the technical scope of the present invention. For example, the incident prediction device 210 and the maintenance management device 220 are devices separate from the insurance claim payment reviewing device 100, but they may be a single device.

In the above-described embodiment, the insurance claim payment reviewing process (see FIG. 4) is executed by the determination unit 114, but human judgment may be included in some of the process. For example, when determining whether maintenance on the facility/device is appropriate in step S12, the determination unit 114 may make a determination by displaying a related maintenance management card 141 and acquiring a result of a determination made by a person. In addition, when an insurance claim payment reviewing process is started by receiving a maintenance management card 141 for maintenance corresponding to an incident, the determination unit 114 may start the insurance claim payment reviewing process by displaying the maintenance management card 141 and receiving a start instruction from a person.

The present invention can take various other embodiments, and various modifications such as omissions and substitutions can be made without departing from the gist of the present invention. These embodiments and modifications thereof fall within the scope and gist of the invention described in the present specification, etc., and fall within the scope of the invention described in the claims and the equivalent thereof. Reference Signs List

10, 10A, 10B, 10C insurance claim payment reviewing system
100, 100A, 100B insurance claim payment reviewing device
111 acquisition unit
112 prediction accuracy calculation unit
113 detection unit
114 determination unit
130 incident prediction database
140 maintenance database
190, 218, 228, 238 distributed ledger
290A, 290B, 290C blockchain network
298 smart contract (program)

## Claims

1. An insurance claim payment reviewing system comprising a determination unit configured to:
receive a claim on an insurance benefit from insurance with respect to an incident; and
approve the claim when a predicted probability of occurrence of the incident is lower than or equal to a predetermined value.

2. The insurance claim payment reviewing system according to claim 1, further comprising:
an incident prediction unit configured to calculate the predicted probability of occurrence of the incident.

3. The insurance claim payment reviewing system according to claim 1, wherein the determination unit acquires the predicted probability of occurrence of the incident with reference to distributed ledgers in which the predicted probability of occurrence calculated by the incident prediction device, which calculates the predicted probability of occurrence, is recorded.

4. The insurance claim payment reviewing system according to claim 1, wherein referring to a record of maintenance work performed on an object covered by the insurance, the determination unit performs a process of rejecting the claim when predetermined maintenance work has not been performed on the object covered by the insurance.

5. The insurance claim payment reviewing system according to claim 1, further comprising a detection unit configured to detect the occurrence of the incident with reference to a record of maintenance work performed on an object covered by the insurance.

6. The insurance claim payment reviewing system according to claim 4 or 5, wherein the maintenance work is recorded in distributed ledgers.

7. The insurance claim payment reviewing system according to claim 1, further comprising a prediction accuracy calculation unit configured to calculate an accuracy of the predicted probability of occurrence of the incident.

8. The insurance claim payment reviewing system according to claim 1, wherein the predicted probability of occurrence of the incident is based on a probability that a failure occurs in an object covered by the insurance.

9. The insurance claim payment reviewing system according to claim 1, wherein
the incident is an accident of a power transmission line, and
the predicted probability of occurrence of the incident is based on a prediction of a timing at which a tree comes into contact with the power transmission line.

10. The insurance claim payment reviewing system according to claim 1, wherein
the incident is a power failure, and
the predicted probability of occurrence of the incident is based on a prediction of a power demand.

11. A program for causing a computer to execute a process as a smart contract on a blockchain network, the process including:
receiving a claim on an insurance benefit from insurance with respect to an incident; and
approving the claim when a predicted probability of occurrence of the incident is lower than or equal to a predetermined value.

12. An insurance claim payment reviewing method of an insurance claim payment reviewing system, the insurance claim payment reviewing method comprising:
by the insurance claim payment reviewing system,
receiving a claim on an insurance benefit from insurance with respect to an incident; and
approving the claim when a predicted probability of occurrence of the incident is lower than or equal to a predetermined value.
